# EUROPEAN PATENT APPLICATION

(11) **EP 2 749 611 A2**
(43) Date of publication of application: **02.07.2014**
(21) Application number: 13199845.2
(22) Date of filing: 30.12.2013
(51) Int. Cl.: C09D 11/00

(54) **Noble metal based ink**

(30) Priority: 28.12.2012 US 201261746627 P
(71) Applicant: Dip-Tech Ltd., 44643 Kfar Saba (IL)
(72) Inventor: Shipway, Andy, 92542 Jerusalem (IL)
(74) Representative: Hoefer & Partner

(57) **Abstract**

A silver-based ink goes through several changes during the drying and firing process to change from a printable ink to a conductive silver film. The formulation of the ink is selected to optimize this process of changes and to produce a dense silver layer with adhesion to the substrate sufficient to prevent silver layer blistering and delamination.

## Description

### TECHNOLOGY FIELD

The present invention is concerned with an ink for printing reflective or conductive layers on a substrate, such as a glass or ceramic substrate, a method for printing and articles obtained with said method.

### BACKGROUND

Silver-based inks are popular for printing light-reflecting images and/or electrically conductive traces. The inks are widely used in production of hybrids, VLSIs, RFID patterns, antennas, heating elements, sensors, solar cells, and other electronic items where the inks are typically deposited by printing on ceramic materials. Such inks are also used in vehicular glass production, for example for detailed circuit patterns, for example the defrost silver ink layer pattern of a back shield window of a car. Silver metal-based inks are also used for decorative purposes, for example, on glass substrates.

Existing silver inkjet inks are generally based on silver nanoparticles. These particles sinter at less than 300°C to give a continuous silver film, on account of their nano-metric size which leads silver atoms on the highly curved nanoparticle surface to behave to some extent as a liquid and so effectively lowers the melting point of the nanostructured silver. A low sintering temperature is considered to be an advantage, as it saves time and energy and allows the use of e.g. plastic substrates. Therefore, much research effort has been expended to achieve silver nanoparticles and formulations thereof that provide sintering at especially low temperatures.

In order to ensure the optimum adhesion of the inks to certain substrates, in particular to glass or ceramic substrate, it can be advantageous to fire printed ink patterns at temperatures of about 600°C. This high-temperature treatment can provide a denser and more conductive silver layer even in the case of low-temperature-sintering particles. Heating above the Tg of the substrate (particularly relevant in the case of glasses) allows the more intimate contacting between the silver and the substrate, which in turn improves significantly the adhesion strength. In addition, silver ink may contain small amounts of a finely ground glass frit. The inclusion of such a frit is well-known in screen-printing pastes. The glass frit is added to improve the scratch-resistance and adhesion strength of a silver ink when it is fired above the Tg of the glass frit, typically to around 600 °C. It should be noted that such screen-printing pastes utilize silver particles larger than 1 micron that do not sinter at a low temperature.

The thermo-mechanical conditions imposed during the firing of ink containing metal nanoparticles and the consequent formation of a continuous metal layer at a low temperature (e.g., 200°C) on the glass or ceramic surface, develops in the metal layer a tensile stress. This stress is caused by the differential thermal expansion between the glass and the metal film/layer. The thermal coefficient of expansion for silver is 18.9 ppm/°K and the thermal coefficient of expansion for soda-lime glass is ∼8.5 ppm/°K. This stress eventually causes the metal layer to peel off, form blisters, crack, or delaminate from the glass or ceramic substrate, thus limiting the useful output of the product or reducing useful product life.

The defects in the silver layer can occur rapidly and at a low temperature, and silver has a very high reflectivity in the infrared part of the electromagnetic spectrum. This is particulary a problem where glass firing furnaces or kilns are used that typically utilize infrared (IR) heaters. Thus, when a printed object is fired aggressively to a high temperature, the continuous and inhomogeneous silver film causes differences in the heating rate of different parts of the substrate. These differences lead to stresses within the substrate itself, and consequently can result in warping, weakening, or even the catastrophic fracture of the entire item.

Although the cooling of the fired glass with a conductive silver film deposited on it can be a slower process that could continue for a couple of hours, it could also generate additional stress, because the metal layer could have segments not fully fired with the glass and the glass and the metal film all have different rates of cooling.

### SUMMARY

The present invention provides an ink and a method of forming a conductive and/or reflective noble metal based film on a surface of a substrate, like a glass or ceramic substrate. The method includes the deposition of an ink formulation onto the substrate, and thermal processing of the substrate with the deposited ink. In the course of the thermal processing the continuous noble metal film is gradually generated from the noble metal based particles, for example silver based nanoparticles contained in the ink.

The ink formulation of the present invention comprises noble metal based particles dispersed in a carrier, wherein the particles are either noble metal nanoparticles that are at least partially coated with a binder, or noble metal compound based particles. It is assumed that those particles that are used for the present invention will form a metal film at a higher temperature than inks as known in the art. It has been surprisingly found that the problems as outlined above can be overcome if particles are used that build a metal film at a high temperature, specifically by using particles that build a film only beyond about 300°C or more. It has been found that an ink comprising either nanoparticles that are at least partially coated with a binder to prevent sintering until at least a temperature of 300°C, or particles of noble metal compounds that are converted to metal and produce a metal film beyond a temperature of 300°C, preferably at a temperature of 315°C or more, more preferred at a temperature between 440 and 470°C, or a mixture of both, provides a film without blisters and with good adhesion when printed on a substrate such as glass, ceramic or metal.

Examples for noble metal nanoparticles that can be used for the present invention are silver nanoparticles, gold nanoparticles, platinum nanoparticles, palladium nanoparticles, osmium nanoparticles, or a mixture thereof. Silver metal nanoparticles are preferred. When metal nanoparticles they should at least partially be coated with a binder to prevent sintering of the metal until at least a temperature of 300°C.

Examples for noble metal compound based particles are silver carbonate, silver oxide, silver hydroxide, gold(I)chloride, platinum(II)chloride, palladium acetate, palladium(II)chloride, osmium(IV)-oxide and -chloride, or mixtures thereof. When particles based on a noble metal compound are used, it is essential that compounds are used that are decomposed/converted to metal at a temperature above 300°C, preferably above 315°C, most preferred at a temperature between 440 and 470°C. It has been found that when using such compounds the differential thermal expansion between substrate and metal film by the time the maximum firing temperature is reached is negligible, thereby avoiding blister formation.

In the following the ink of the present invention and the method for printing are mostly explained for a silver based ink. Thus, whenever silver is mentioned, this can be substituted by another noble metal. Whenever an ink comprising silver based nanoparticles is mentioned, an ink comprising other noble metal compounds can be used similarly, and whenever a silver film is mentioned this can be another metal film accordingly.

The nanoparticles used according to the present invention are at least partially coated by a binder that is used to coat the noble metal based, such as silver based nanoparticles and to keep the nanoparticles separated, thus, preventing the nanoparticles from sintering to form a continuous metal film until such time and temperature that the binder is thermally decomposed. Preferably the nanoparticles of the present invention are coated by a binder and dispersed in a carrier.

The decomposition temperature can be determined as is known in the art, for example using thermo-gravimetric analysis (TGA). Using TGA a binder and a dispersant that are useful for the ink of the present invention have a decomposition temperature, peak center, measured by TGA under air at 50°K/min above 300°C, preferably at 315°C or above.

The decomposition temperature is preferably close to the Tg of the substrate being coated by the ink formulation, for example in a range of +/- 15°C of the film-building temperature. A preferred binder coats the metal based nanoparticles, for example silver based nanoparticles and thermally decomposes at a temperature of at least 300°C, for example at least 315°C so that the metal film is not formed on the substrate until a temperature of at least 300°C is reached.

As used in the present disclosure the term "noble-metal based particle" refers to particles based on noble metal. The particles can be noble metal nanoparticles that can comprise at least one noble metal, such as silver, gold, platinum, palladium, or osmium, or a mixture of noble metals, or can be noble metal based particles that comprise one or more noble metal compounds, such as silver, gold, platinum, palladium, or osmium compounds or a mixture of such compounds, or a mixture of noble metals and noble metal compounds.

The term "silver-based particle" as used in the present disclosure encompasses both silver metal nanoparticles and silver compound compound based particles, such as silver carbonate or silver oxide particles.

The term "nanoparticle" as used in the current disclosure: includes particles having an average size or length of one dimension in the range of 1 to 100 nanometers. The size or length can be determined as is known in the art, for example by dynamic light scattering (DLS), or more preferably by laser light scattering.

The term "binder" as used in the present disclosure refers to an organic compound that can be used for coating nanoparticles and thermally decomposes at a temperature close to the film building temperature of the metal, such as more than 300°C or more than 315°C.

The term "coated" as used in the present disclosure means that a nanoparticle is at least partially covered by a binder. Coating can mean physical covering as well as adhesion of a binder at the nanoparticle or binding of a binder.

The term "noble metal compound based particles" refers to particles comprised of a noble metal compound, preferably a silver compound, that has a decomposition or conversion temperature of more than 300°C, preferably higher than 315°C, and most preferred between 440 and 470°C. The particles can have a small size, typically less than 100 nm (to prevent rapid settling) and preferably are in the form of a slurry, dispersed in the carrier.

"Conversion temperature" refers to a temperature where the noble metal compound is converted to noble metal. The metal can build a film.

The term "carrier" as used in the present disclosure refers to a fluid or liquid medium that can carry the nanoparticles or particles. The particulate material is dispersed in the carrier.

The term "substrate" as used in the present disclosure refers to any type of material that can be printed with ink and fired, such as glass, ceramic, semiconductor, polymer, or other.

The ink of the present invention at least comprises particulate material based on at least one noble metal as defined above and explained in detail below, and at least one carrier. The ink can comprise further ingredients that are used for inks for forming conductive and/or decorative and/or reflective films, such as frits, dispersants, vehicles, pigments, and other additives.

An example of a preferred ink composition comprises (All ingredients are provided by weight unless otherwise stated):
20% to 80% by weight of noble metal based, such as silver based nanoparticles;
0.5% to 15%, preferably 0.5 to 5 by weight of binder; and
the balance carrier, based on the total weight of the composition; or 20% to 80% by weight of noble metal compound based, such as silver compound based particles;
the balance carrier, based on the total weight of the composition.

A composition can additionally contain further additives that are used for inks, for example:
0.5% to 10% by weight of dispersant;
20% to 70% by weight of a solvent vehicle; and
0.05% to 2.0% of other additives, based on the total weight of the composition.

In another embodiment of the present invention the ink comprises:
20% to 80% of a noble metal compound, such as silver carbonate, in particulate form
0.5% to 10% of dispersant;
20% to 70% vehicle;
0.5% to 5% of binder; and
0.05% to 2.0% of other additives.

Because the metal film is formed only at a temperature close to the Tg of the glass, heating is more homogeneous and strong adhesion is achieved rapidly upon film formation. In one example of the present ink, a silver film is produced only at about 300°C, and the differential thermal expansion by the time the maximum firing temperature is reached (for example 670°C) between the substrate, which could be glass, and the metal silver layer, is less than 0.1%. In this case the differential thermal expansion between the glass substrate and the metal silver film is small enough to avoid silver film blister formation.

In another example of the present ink the silver film is produced even at higher temperatures of about 440 - 470 °C, and the differential thermal expansion by the time the maximum firing temperature is reached, between the substrate and the metal silver layer, is almost negligible. At such small differential thermal expansion the bond of the metal silver layer shows substantially no blistering or delamination upon firing, and since strong and homogeneous adhesion is therefore achieved, the item does not suffer the problems described above upon fired glass cooling. In addition to the fabrication of conductive patterns with relatively large conductors, for example, vehicular glass, such method could be used to form detailed circuit patterns from metal silver on glass, ceramic or semiconductor substrates, and alleviate problems associated with metal layer blistering or delamination. The method and ink are also applicable to the production of decorative patterns and in particular for decorating construction glass that has to withstand harsh environmental conditions.

Thus, in a preferred embodiment the binder and/or the dispersant are selected such that the differential thermal expansion between the substrate and the metal layer, by the time the maximum firing temperature is reached, is less than 0.5%, more preferable less than 0.2%, even more preferred less than 0.1 %.

Additional features and advantages of the method will be apparent from the detailed description which follows, taken in conjunction with the accompanying data, which together illustrate, by way of example, features of the method.

### BRIEF DESCRIPTION OF THE DRAWINGS

Fig. 1 illustrates the TGA Results for Silver Carbonate.
Fig. 2 Illustrates the TGA Results for Disperbyk -106 Dispersant.
Fig. 3 illustrates the TGA Results for Paraloid B-66 Binder (A p(MMA-co-BA) acrylic resin.
Fig. 4 illustrates the TGA Results for Laropal A81 Binder.
FIG. 5 is a schematic illustration of an example of an article printed with the present ink.

### DETAILED DESCRIPTION

The present ink could be deposited on the glass or ceramic substrate by printing, such as screen-printing, flexographic printing, roller-coating, hand painting, and inkjet printing, wherein preferably the printing method is screen printing or inkjet printing. Described below are a number of ink compositions.

The ink comprises silver and a binder and/or a silver compound as essential ingredients and preferably a dispersant. Silver can be present as metallic silver in the form of nanoparticles, or as particulate silver compound that is converted to silver metal when fired. Suitable silver compounds are silver carbonate, silver oxide, silver hydroxide or mixtures thereof, among others. Further noble metal compounds are outlined above. In one example of the ink, the silver is present in the form of silver carbonate particles. However, it is noted that silver carbonate exists in an equilibrium with silver oxide and carbon dioxide, so depending on the conditions and history of the ink or composition, a certain amount of silver oxide could also be present. Certain amounts of silver hydroxide and metallic silver could also be present in the ink. These silver compounds do not affect the ability of the ink to form conductive layers, even if they are present in large amounts. In concept the inks disclosed herein could be entirely based on silver oxide or silver hydroxide in place of silver carbonate, but silver oxide is a reactive material that is unstable towards easily oxidized materials, atmospheric carbon dioxide, and light - and silver hydroxide is also relatively unstable and difficult to prepare. In a preferred embodiment the silver compound particles comprise at least silver carbonate and can comprise optionally silver oxide and/or other silver compounds additionally.

The particulate noble metal particles of the ink, for example silver particles, can also be present in the form of metal nanoparticles. In this case, a binder is additionally present in the formulation, which coats the nanoparticles and keeps them separate, thus preventing them from sintering to form a continuous film until such time and temperature that the binder is thermally decomposed. The binder can also be used for noble metal compound based particles.

The carrier in which the particulate material, such as noble metal nanoparticles or noble metal based particles, is dispersed can be any desired carrier. Examples of suitable carriers comprise solvents (also referred to as a solvent vehicle) which evaporate or decompose at a temperature below the thermal decomposition temperature of the binder. Examples for useful carriers include glycol ethers, alcohols (including diols) and their esters of varying lengths, ketones such as cyclohexanone, organic carbonates, diesters of dicarboxylic acids, water, alkanes, oils, and paraffins.

Following ink deposition, the ink composition is preferably dried to evaporate or decompose the solvent vehicle to provide the substrate with a deposited pattern. The substrate is subjected to a heat treatment which is usually performed at about 20 °C to about 700 °C. This temperature range provides the metal silver layer with desired physical properties. The heat treatment could be performed under inert gas atmosphere, or in air, nitrogen or carbon monoxide or in a mixture gas comprising hydrogen and air or other inert gas, depending on the need. An example for a decomposition schedule is shown below in Table 1. The different ingredients of the ink decompose at different temperatures and rates, but in general the order of processes is as shown in Table 1. It should be noted that these values were measured specifically under conditions similar to commercial glass firing at a heating rate of 50 °K/min and an air atmosphere. Literature values for the processes may be different. For example, 280°C is often quoted as a temperature for the spontaneous reduction of silver oxide.

**Table 1 Ink Ingredients Decomposition Schedule (exemplary)**

| Process Temperature | Process description |
|---|---|
| 20 - 40 °C | Temperature at which the printing is performed |
| 50 - 200 °C | Evaporation of solvents (vehicle) to give dry ink layer |
| 200 - 300 °C | Decarboxylation of silver carbonate to give silver oxide |
| 250 - 400 °C | Decomposition of organic materials (e.g. dispersants, binders) |
| 440 - 470 °C | Decomposition of silver oxide to give silver metal |
| 570 °C | Tg of soda-lime (substrate) glass. |
| 670 °C | Maximum firing temperature. |

At a temperature of about 220°C, silver carbonate decarboxylates releasing carbon dioxide (CO₂) to give silver oxide. It further undergoes spontaneous reduction at temperatures exceeding 280°C, to release oxygen and yield silver metal. At temperatures between approximately 200 and 350°C, organic materials are decomposed and/or oxidized. The decomposition of the organic components takes place partly by oxidation (by atmospheric oxygen), and in some cases can leave a carbon-rich residue that does not further decompose during the firing process. Such carbon residue is electrically conductive, so it does not impact the electric properties of the ink. While silver carbonate is an electrical insulator, silver oxide is a semiconductor (resistivity of about ∼10,000 Ωm) and silver metal is a conductor (resistivity ∼16 nΩm).

The silver carbonate into metal silver conversion stages as well as other ink ingredients dynamics have been experimentally measured. The ink ingredients were submitted to TGA/DSC (thermo-gravimetric (TGA) and differential scanning calorimetric (DSC)) analyses to determine how they decompose under glass firing conditions. In order to as closely as possible model the firing process, the TGA runs were made under air at a heating rate of 50 ° K/min.

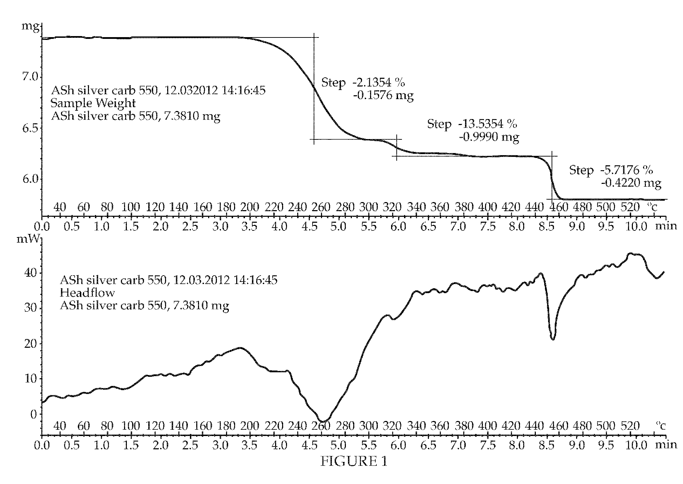

The TGA Results for Silver Carbonate are shown in Fig. 1.

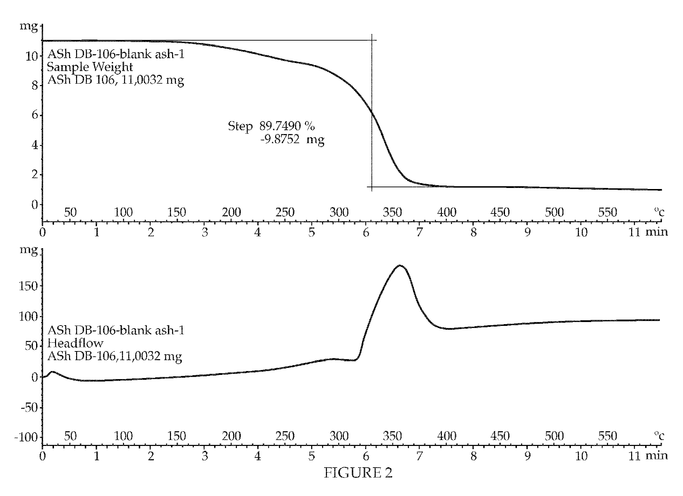

The TGA Results for Disperbyk -106 Dispersant are shown in Fig. 2. (Disperbyk™-106 is an acidic dispersant commercially available from Byk Chemie of Wesel, Germany.)

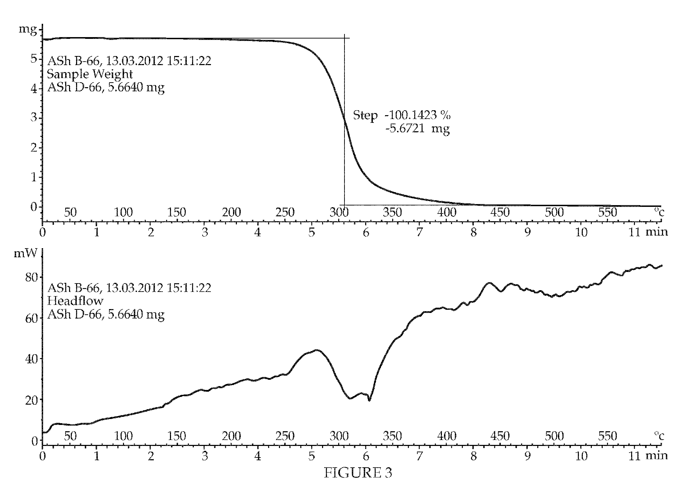

The TGA Results for Paraloid B-66 Binder (A p(MMA-co-BA) acrylic resin available from the Dow chemical company) are shown in Fig. 3.

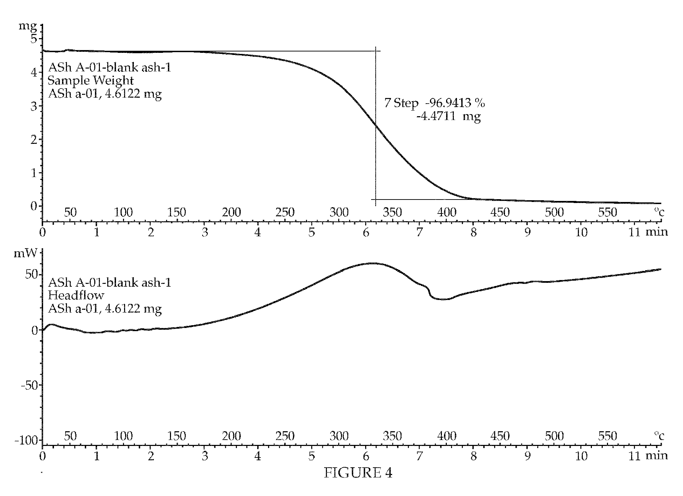

The TGA Results for Laropal A81 Binder (Laropal A81 Binder is an aldehyde resin commercially available from BASF Aktiengesellschaft, 67056 Ludwigshafen Germany) are shown in Fig. 4.

Without being bound by theory it is assumed that organic components that decompose during firing have an influence on the film formation. Those organic components are in particular dispersant and binder that are or can be present in the ink composition of the present invention. These are components that can control the morphology of the dried ink, coating the individual inorganic particles and holding them into a specific matrix. It can be seen from the TGA analyses that the dispersant (Disperbyk DB-106) and binder (Laropal A81) that produce a silver carbonate-based ink with good adhesion to the substrate, decompose at temperatures intermediate between the two decomposition regions of the silver carbonate (at 260-400°C). Without being bound by a specific theory, the author believes that better adhesion of the final metal silver results from inks where the silver carbonate particles continue to be stabilized during their decarboxylation. Accordingly, the binders and dispersants for noble metal based inks, in particular silver carbonate-based inks were selected from compounds that have decomposition temperatures (peak center, measured by TGA under air at 50°K/min) above 315°C.

It was found that a commonly used dispersant - stearic acid, that decomposes well before the conversion of silver carbonate to silver metal is complete, results in poor adhesion to the substrate when used as dispersant in silver carbonate-based inks with poor adhesion, it begins to decompose well before the decarboxylation of the silver carbonate is complete.

In the case of silver nanoparticle-based inks, a binder is used to at least partially coat the nanoparticles. The binder could be chosen to provide isolation of the nanoparticles from each other until a high temperature. Therefore, in order to have a positive effect, the decomposition temperature of the binder should be selected to be higher than the natural sintering temperature of the silver particles. Useful binders can be selected from aldehyde resins, a polyvinylpyyrolidones, preferably with an MW of about 10,000, polyvinyl butyrals, and methyl celluloses. It has been found that aldehyde resins and acrylic resins are particularly useful as binders for coating noble metal nanoparticles. The binder can be used for coating noble metal compound based particles as well. Useful products are for example a acrylic resin binder available as Paraloid B-66 Binder, a p(MMA-co-BA) acrylic resin from Dow chemical company, or an aldehyde resin binder available as Laropal A81 Binder, commercially available from BASF Aktiengesellschaft, 67056 Ludwigshafen Germany. Both A-81 and B-66 decompose above 300°C, i.e. higher than the sintering temperature of silver nanoparticles, and can effectively prevent low-temperature sintering of silver nanoparticles. If a large quantity of binder is used, then its large volume fraction in the dry pre-fired ink layer results in a porous and semitransparent silver layer. Typically this effect can occur at around 15 volume % or more. In some cases this semitransparency may be an advantageous feature, particularly since the semitransparent silver layer retains conductivity.

A preferred amount of binder is 0.5 to 15% by weight of binder, based on the ink composition. More preferred the amount is 0.5 to 5% by weight, or up to 2 % by weight.

Glass firing furnaces typically utilize infrared (IR) heaters. When conventional ink containing metal silver particles is sintered, the metal silver reflects IR radiation, and so the glass heats slowly and inhomogeneously, i.e., the areas and side with metal silver coating i.e., the areas with metal silver coating heat slower, particularly if blisters are present. These areas heat and cool more slowly than uncovered by metal silver areas. Consequently time and energy consumption to perform proper heat treatment can be increased, and stresses occur in the glass that leads to spontaneous breakage or deformation of the metal silver layer and in some cases of the glass substrate also.

According to the present method and ink composition used, decomposition of silver oxide to give silver metal layer takes place at temperatures of about 440°C - 470°C or even higher temperatures, and decomposition of binders to allow nanoparticle sintering occurs above 300°C. Ink components present on the surface of the glass reflect IR to a much lesser extent and the heating of the glass substrate and of the ink layer is homogenous and does not form tensile stress between the ink layer and the glass substrate. This removes an additional potential source of metal silver layer blisters and delamination formation.

Thus, in a further aspect a method for printing reflective and conductive layers on a substrate is provided that comprises:
printing an ink on a glass substrate or a metal substrate or a ceramic substrate to form an ink pattern on the substrate, the ink comprising particles dispersed in a carrier; wherein the particles are noble metal nanoparticles coated with a binder, wherein the binder has a decomposition temperature of above 300°C, or noble metal compound based particles, the compound having a conversion temperature above 300°C; and thermally processing the substrate with the ink pattern at a temperature and time sufficient to decompose the binder or to convert the noble metal compound into elemental noble metal.

In a preferred embodiment an ink as described above is used is used in this method.

### Ink Composition Ingredients Selection

Ink-jet inks are commonly formulated to contain a large proportion of a mobile liquid vehicle. The current inkjet ink compositions comprise at least one organic compound as carrier or vehicle. Those compounds are known to the skilled person. Examples are fluids or liquids that can disperse the particulate metal material. An example for a suitable carrier is Dipropylene Glycol Monomethyl Ether (DPM). Organic compounds that are useful for the present ink composition could evaporate, decompose or even burn out at certain temperatures, preferably below the decomposition temperature of the binder and/or dispersant.

The liquid vehicle can be selected for properties including its viscosity, safety, chemical stability, cost, and vapor pressure. The vehicle can also be selected such as not to allow the ink to dry in the inkjet print-heads to such an extent that the print heads become clogged. The liquid vehicle can be a single component or a mixture of components, examples are outlined below.

Vehicle components could include glycol ethers, alcohols (including diols) and their esters of varying lengths, for example as marketed under the Dowanol trade name by The Dow Chemical Company, Midland, Michigan 48642 U.S.A. Other components may include ketones such as cyclohexanone, organic carbonates, diesters of dicarboxylic acids, water, alkanes, oils, and paraffins.

Silver carbonate is less dense than silver metal, but is still a dense material with specific weight of about 5.5g/cm³, so it could be difficult to stabilize it in a dispersion. It contains 78% silver by mass. At the same time, high solids dispersion will make a high density ink, which may be problematic.

The vehicle is evaporated at a temperature lower than that which will chemically alter the other organic components or the silver carbonate, and this evaporation takes place in a "drying" step prior to the higher temperature treatment 'firing" of the ink layer. Most of the dispersants examined for silver carbonate were acidic polymers or salts of acidic polymers, because of their ability to bind (and even react with) the silver carbonate particle surface. Useful acidic dispersants are for example a polymer with acidic groups that is commercially available as Disperbyk™-106 (DB-106) (Disperbyk is a trademark of Byk Chemie of Wesel, Germany) or an alkylolammonium salt of an acid group containing copolymer that is commercially available as Disperbyk™-180 (DB-180). It was found that acidic dispersants provide dispersions that settle more slowly than acid salt dispersants. For example, Disperbyk™- 106 (DB-106) was found to be superior in this regards to Disperbyk™-180 (DB-180) both in speed of settling and in re-dispersability. Although stearic acid (CH₃(CH₂)₁₆CO₂H) gave the most stable dispersion and was easier than the other acid dispersants to redisperse after settling for a short period, it might be less preferable if it is used in a composition without binder.

Noble metal, in particular silver, nanoparticle dispersions are available on the market, for example from XJet Solar (Rehovot, Israel). In the examples nanoparticle dispersions were used as supplied either by the Hebrew University of Jerusalem

(Magdassi group) or XJet Solar (Rehovot, Israel). These dispersions usually include dispersants.

In order to provide the final ink layer with high adhesivity to the substrate and high scratch-resistance, glass frit or other inorganic fillers could be included in the ink composition. Such a frit could melt below the processing temperature of the ink. A bismuth-based glass frit was found to significantly increase the adhesivity of silver formed from silver carbonate in the case where the formulation otherwise provided poor adhesivity. This improvement was noted at a 0.5% to 10% concentration of glass frit, but at higher levels of glass frit concentration (above 5 wt%) the resistivity of the resulting silver layer was also increased. Thus, in a preferred embodiment the ink contains 0.5 to 10% by weight, more preferred 0.5 to 5 % by weight of a glass frit, preferably a bismuth glass frit.

To provide an ink with appropriate physical properties for inkjet printing onto glass, the hydrophobicity and surface tension of the ink should be appropriate. Certain additives, that are well-known to the skilled artisan,and that are designed to control these properties are therefore preferably added to the ink composition in the amounts that are known to the skilled person or can be adapted in routine tests. Additional materials may be added to improve leveling behavior. Many additives are available from various suppliers to perform these tasks. Specifically, a solution of a polyether modified polydimethylsiloxane - Byk-341 can be used with silver carbonate-based inks to reduce surface tension, and a polyacrylate-based surface additive - Byk-358, (both available from BYK-Chemie GmbHBYK-Chemie GmbH, Germany) can be used to improve leveling behavior.

After printing and prior to the heat treatment (firing), it is preferred to perform a lower temperature "drying" step. This removes the majority of the liquid vehicle, preparing the ink layer for firing, and leaves the ink layer robust and dry enough for required handling ("green" layer). In order to maximize this robustness, a binder may be included in the ink composition in a low concentration. As with the other organic components of the ink, its selection could be made carefully in order to ensure that the properties of the fired ink will be optimal.

At a concentration of up to about 2%, an aldehyde resin such as Laropal A-81 commercially available from BASF Aktiengesellschaft, Germany, provides a "green" scratch resistance close to 8B (suitable for the required handling) without causing a large increase in viscosity of the ink. PVP (polyvinylpyyrolidone, MW 10,000) gave similar results. PVB (polyvinyl butyral) and methyl cellulose binders give less impressive scratch resistance of the unfired, dried layer. However, all these four binders provide inks that result in a high adhesion of the final silver layer to the glass. Thus, in one embodiment of the present invention the ink comprises a binder selected from an aldehyde resin, a polyvinylpyyrolidone, preferably with an MW of about 10,000, polyvinyl butyral, and methyl cellulose.

In contrast, the acrylic binder Paraloid B-66 commercially available from Rohm and Haas, USA, commonly used in this kind of ink, provides an ink that results in poor adhesion of the silver layer to the glass after firing when used in formulations with silver carbonate.

The physical properties of the inks were measured using the following techniques: Testing of the adhesion of the fired silver ink layer to the substrate was performed by rubbing the layer with a small (∼2 cm²) wad of steel wool at least 20 times in a circular motion with a load of approximately 300g.

The reflectance of fired and polished silver layers obtained with different ink formulations was measured at different incident angles using red HeNe laser (Wavelength 632nm.). The measured reflectance was higher than 90%.

### EXAMPLES

The following ink compositions represent examples of the present ink. They are presented to explain the compositions in more detail, and do not limit the ink to the presented compositions. Some comparative ink examples of known standard silver nanoparticle-based inks have been given to demonstrate the differences in their blistering behavior.

### Comparative Ink Examples: Standard Silver Nanoparticle-based inkjet inks.

A silver nanoparticle-based ink (50 wt% silver in Dowanol DB) was purchased from the Hebrew University of Jerusalem. Another silver nanoparticle-based ink (50 wt%) was purchased from PV Nano Cell Ltd. Migdal Ha'Emek, 23100 Israel. A third nanoparticle-based ink was created by diluting commercial silver nanoparticle dispersion from XJet Solar Rehovot 76701, Israel with Dowanol DPM to achieve a dispersion containing 45 wt% silver. All of these inks were designed for inkjet printing, and were printed successfully by this method on glass.

All samples printed with these inks dried at 120°C to give dark-colored reflective films. All three commercial inks sintered to give continuous conductive silver films at temperatures of less than 250°C. However, such films had very poor adhesion to the glass substrate. Upon firing to glass processing temperatures (670°C), all samples fractured violently into many pieces. Examination of the samples after cooling showed that although some parts still had reasonable adhesion strength, all samples contained large amounts of blistering where the silver film was entirely detached from the glass surface.

### Example 1: Nanoparticle-based inkjet ink modified with A-81 binder

An ink was made by formulating:

| **Ingredient** | **Percentage** |
|---|---|
| Silver nanoparticle dispersion (65% silver in DPM, available from XJet Solar) | 70% |
| 20% solution of A81 binder in DPM | 20% |
| 70% dispersion of glass frit in DPM | 3% |
| Disperbyk-180 | 1% |
| DPM | 6% |

Additives, dispersants, and other ink ingredients could be added when necessary.

### [All amounts are given by weight unless otherwise noted.]

The ink produced had a viscosity of 0.023 Pa·s (23.7 cP) at 25°C. (Viscosity was measured using a Brookfield DVI low-viscosity viscometer running at 80 rpm at 25°C with spindle 18.) The ink was printed by inkjet printing using Dimatix-Spectra inkjet printhead commercially available from FujiFilm, Inc., New Hampshire USA to give a print that dried to give a matte blue appearance. After firing at 670 °C, the print had a scratch resistance in excess of 30N and gave a resistivity estimated at about twice (∼2x) the resistivity of bulk silver. No blisters or serious defects were noted. (Scratch testing was performed using an Elcometer 3092 sclerometer available from Elcometer Limited, Manchester UK set at 20N (Blue spring) or 30N (Green spring) force. The sample was considered to "pass" in the case that the sclerometer did not remove silver from the substrate (i.e. did not scratch all the way through the silver layer), even if the surface was marked.)

An analogous formulation with half the quantity of A81 gave a print that fired to give blisters and cracking of the glass.

### Example 2: Nanoparticle-based inkjet ink modified with B-66 binder

An ink was made by formulating:

| Ingredient | Percentage |
|---|---|
| Silver nanoparticle dispersion (65% silver in DPM, available from XJet Solar) | 70% |
| 10% solution of Paraloid B66* binder in Dowanol PGDA | 12% |
| Dowanol PGDA** | 18% |

| | |
|---|---|
| *PARANOID B-66 is a thermoplastic acrylic resin commercially available from Dow Chemical Company, Midland, Michigan 48642 U.S.A. ** DOWANOL™ PGDA is a Glycol Ether commercially available from Dow Chemical Company, Midland, Michigan 48642 U.S.A. | |

The ink produced had a viscosity of 0.017 Pa·s (17 cP) at 25°C, a surface tension of 25 mN/m (dyne/cm), and a density of 1.63 g/cm³. It was printed by inkjet printing using Dimatix-Spectra printheads to give a print that dried to give a matte blue appearance. After firing at 670 °C, the print had a scratch resistance in excess of 20N (Tested by an Elcometer 3092 (Blue spring)) and gave a resistivity estimated at about twice (∼2x) the resisitivity of bulk silver. No blisters or serious defects were noted.

An analogous formulation with 10% of the B66 solution gave a print that fired to give blisters and cracking of the glass. An analogous formulation with 20% of the B66 solution gave a fired sample that had a much whiter appearance and some transparency.

### Example 3: Silver carbonate-based ink

8.25 g of finely ground silver carbonate powder (available from Aldrich Chemical Company, Milwaukee, WI USA) and 3.48 g of DPM were sonicated and shaken together for 10 minutes. The result was a slurry containing 70% silver carbonate (w/w). When the dispersant DB-106 was added to this mixture at a concentration of about 5% w/w, it resulted in an ink that gave excellent homogeneous film-forming ability. The samples were fired at a temperature of about 650°Celsius for a time of approximately 2 minutes. This firing time was sufficient to change at least the conductivity of the layer of ink making it higher than the green layer conductivity. The resistivity of the layer of ink of metal silver was less than ten times the resistivity of bulk silver metal. The electrical resistance of fired silver layers obtained with different ink formulations was tested with a simple two-probe digital multimeter. The probes were pressed onto the sample surface at a separation of about 5 cm. Readings of 1.5 Ohm or less were considered to be a "pass" as this represents approximately the contact resistance of the probes with the surface.

After firing the samples had a white or off-white surface color and were dispersing incident light (i.e. had matte appearance). This is likely micro or nano-structured silver, as is also observed when objects are electroplated with silver. After being polished, this white surface revealed a shiny highly light-reflecting silver surface. The polishing medium was a slurry prepared from submicron glass frit with Disperbyk-180 in a mixture of DPM and water.

This ink passed the adhesion, 20N sclerometer force scratch, and conductivity tests described above.

### Example 4: Silver carbonate-based ink

This is a high-adhesion ink composition prepared by using 2.7 g of the slurry described in Example 3, mixed with 1.42 g of a 10% solution of DB-106 in DPM, to achieve an ink containing 46% w/w solids (about 36% w/w metal silver). This ink is stable for a limited period, but is easily redispersible. The ink composition was drawn at different thicknesses on a glass substrate it formed a silver layer that after firing could not be easily removed even by rubbing with metallic mesh scourer, although the applied layer was relatively a thin 24 microns layer. The layer passed the scratch test at 30N, as well as the adhesion test and the conductivity test. The resistivity of the layer of ink of metal silver was less than ten times the resistivity of bulk silver metal.

The ink and the method described could find use for inkjet printing on glass, specifically to achieve conductivity, and more specifically to allow the printing of rear-window demisters for the automotive industry. However, other applications for conductive printing on glass exist, such as RFID tags, GPS and radio antennas, sensors, power transfer in lighting, etc.

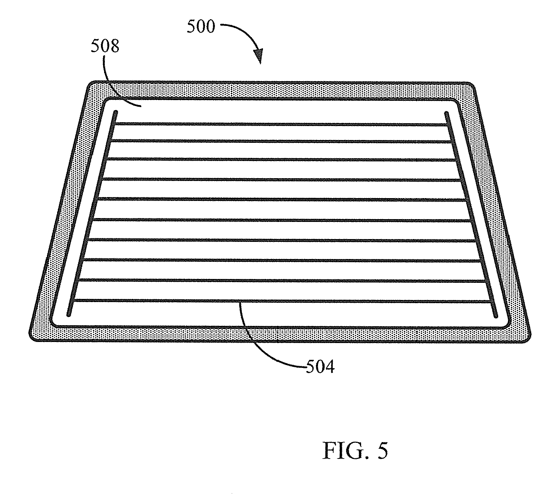

FIG. 5 is a schematic illustration of an example of an article 500, which is a rear-window of a car with a demister, printed or deposited using the disclosed ink. The demister pattern 504 is printed on glass substrate 508. The metallic coating or ink of pattern 504 possess a coefficient of thermal expansion at least twice as large as the coefficient of thermal expansion of the glass substrate 508. Following a thermal processing including firing of the metallic coating of pattern 504 and the substrate, the article was subject to multiple tests that included multiple defrost processes. The article exhibited no delamination or blistering of the metallic coating of pattern 504 relative to the underlying substrate 508.

In addition, polishing the deposited and fired layer results in a shiny silver surface that has applications for decoration. Thin semitransparent silver layers could be used for IR-reflectance in semitransparent windows, i.e. for "cool window" applications.

The technology does not need to be limited to silver - other noble metals could be processed in an analogous way, for example using gold(I)chloride (decomposes to form gold metal at 298°C), or platinum(II)chloride (decomposes to give platinum metal), or palladium acetate or palladium(II)chloride (decompose to give palladium metal). Osmium(IV) compounds such as the oxide and chloride could similarly decompose to form osmium metal. The substrate also does not need to be limited to glass, and can be extended to metals and ceramic substrates (that can survive the high-temperature firing). Finally, the process methodology does not need to be limited to inkjet printing, since it is relevant to e.g. screen-printing, flexographic printing, roller-coating and even hand-painting.

In the decorative arena, an ink could have additional components. For example, an ink which contains silver carbonate together with other pigments could be used to achieve e.g. iridescent or metallic effects.

While the method of forming a conductive and decorative substrate coating has been described in conjunction with the specific examples outlined above, it is evident that many alternatives, modifications and variations will be apparent to those skilled in the art. Accordingly, the examples as set forth above are intended to be illustrative, not limiting. Various changes may be made without departing from the spirit and scope of the examples as defined in the following claims.

## Claims

1. An ink for printing reflective or conductive layers on a substrate selected from glass, metal, or ceramic substrate, comprising:
noble metal based particles, wherein the particles are
a) noble metal nanoparticles coated with a binder, wherein the binder is an organic compound having a decomposition temperature of above 300°C; or
b) particles comprised of at least one noble metal compound having a conversion temperature between 250°C and 470°C; or
c) a mixture of a) and b); and
a carrier, wherein the particles are dispersed in the carrier.

2. The ink according to claim 1, wherein the particles are noble metal nanoparticles selected from the group of silver nanoparticles, gold nanoparticles, platinum nanoparticles, palladium nanoparticles, osmium nanoparticles, or a mixture thereof; or particles based on a noble metal compound selected from silver carbonate, silver oxide, or silver hydroxide, or a mixture thereof; gold(I)chloride; platinum(II)chloride; palladium acetate or palladium(II)chloride; osmium(IV)-oxide or -chloride; or mixtures of any of the foregoing particles and nanoparticles.

3. The ink according to claim 1 or 2, wherein the carrier comprises a fluid selected from glycol ethers, alcohols including diols and esters thereof, ketones such as cyclohexanone, organic carbonates, diesters of dicarboxylic acids, water, alkanes, oils, and paraffins; and comprises preferably Dipropylene Glycol Monomethyl Ether (DPM).

4. The ink according to one of the preceding claims, wherein the binder is selected from an aldehyde resin or an acrylic resin aldehyde resin, a polyvinylpyyrolidone, preferably with an MW of about 10,000, polyvinyl butyral, and methyl cellulose" and/or wherein the ink comprises at least 0.5% by weight based on the total weight of the composition of binder; and/or wherein the ink comprises at least one dispersant, preferably in an amount of up to 1% by weight based on the total weight of the composition; wherein preferably the dispersant is an alkylolammonium salt of an acid group containing copolymer.

5. The ink according to one of the preceding claims, wherein the composition further comprises a glass frit, preferably a bismuth-based glass frit; and/or wherein the frit is present in an amount of at least 0.5% by weight based on the total weight of the composition.

6. The ink according to one of the preceding claims, wherein the ink is for printing layers on a glass substrate and comprises
a silver compound slurry in dipropylene glycol monomethyl ether (DPM);
a glass frit dispersion in DPM; and
a dispersant,
wherein the silver compound is selected such that conversion of the silver compound into metallic silver film is produced at temperatures between 440 - 470 °C; or
an ink composition comprising:
20% to 80% w/w of silver carbonate,
0.5% to 10% w/w of dispersant;
20% to 70% w/w vehicle;
0 to 15 %, preferably 0.5 to 5 % w/w of binder; and
0.05% to 2.0% w/w of other additives.

7. The ink according to claim 6, wherein the silver compound includes at least one of silver carbonate, silver oxide, and silver hydroxide; and/or wherein the silver compound comprises a slurry containing 55 to 75% of silver carbonate particles and/or wherein the amount of silver compound is particles is 20 to 80 % w/w..

8. A method for printing reflective and conductive layers on a substrate comprising:
printing an ink on a glass substrate or a metal substrate or a ceramic substrate to form an ink pattern on the substrate, the ink comprising particles dispersed in a carrier, wherein the particles are noble metal nanoparticles coated with a binder, wherein the binder has a decomposition temperature of above 300°C; or noble metal compound based particles, the compound having a conversion temperature above 300 °C; and thermally processing the substrate with the ink pattern at a temperature and time sufficient to decompose the binder or to convert the noble metal compound into elemental noble metal.

9. The method of claim 8, wherein the ink is an ink of one of claims 1 to 7; and/or wherein the substrate is glass; and/or wherein the noble metal is silver or wherein the noble metal compound is silver carbonate.

10. The method according to one of claims 8 or 9, wherein thermal processing of the substrate with the ink pattern includes firing the metal silver into the substrate surface; or wherein the metallic silver is produced at firing temperature of at least 440 °C; or wherein the silver compound transformation into metallic silver changes conductivity of the layer of ink.

11. The method according to claim 9, wherein the glass firing takes place in furnaces utilizing infrared (IR) heaters and ink components present on the surface of the glass reflect IR to a much lesser extent and the heating of the glass substrate and of the ink layer is homogenous and does not form tensile stress between the metal silver layer and the glass substrate avoiding blisters and delamination formation; or wherein the method further comprises polishing the layer of metal silver after firing to produce a reflective silver layer surface, wherein optionally the reflectance of the reflective silver layer surface is at least 90% at a wavelength of 632nm.

12. The method according to claim 9 further comprising drying the layer of ink containing at least silver carbonate particles prior to firing, wherein drying removes volatile organic components, reducing the content of organic materials, optionally from about 40% or more to about 20% or less.

13. The method according to any one of claims 8 to 12, wherein the printing method is selected from the group comprising screen-printing, flexographic printing, roller-coating, hand painting, and inkjet printing, wherein preferably the printing method is inkjet printing.

14. An article comprising:
a substrate with a noble metallic coating possessing a coefficient of thermal expansion at least twice as large as the coefficient of thermal expansion of the substrate, wherein the article exhibits no delamination or blistering of the coating relative to the underlying substrate after the article has been exposed to a thermal processing including firing of the metallic coating to the substrate.

15. The article of according to claims 14, wherein resistivity of the layer of noble metallic coating is less than ten times the resistivity of bulk silver metal; or wherein the noble metallic coating is a silver coating having a light dispersing (i.e. diffusive, matte) surface after firing; and/or wherein the layer is a reflective silver layer having a reflectance of at least 90% at a wavelength of 632 nm.
